# EUROPÄISCHE PATENTSCHRIFT

(11) **EP 0 429 758 B1**
(45) Veröffentlichungstag und Bekanntmachung des Hinweises auf die Patenterteilung: **05.10.1994**
(21) Anmeldenummer: 90114656.3
(22) Anmeldetag: 31.07.1990
(51) Int. Cl.: F16H 1/32

(54) **Getriebe mit Exzenter und Zykloidenverzahnung**
Transmission with eccenter and cycloidal gearing
Transmission avec excentrique et denture cycloidale

(30) Priorität: 15.11.1989 DE 3937909
(43) Veröffentlichungstag der Anmeldung: 05.06.1991
(73) Patentinhaber: Eurocopter Deutschland Gesellschaft mit beschränkter Haftung, D-81663 München (DE)
(72) Erfinder: Fischer, Florian, D-8066 Kreuzholzhausen (DE); Ritzer, Christian, D-8025 Unterhaching (DE)
(74) Vertreter: Frick, Gerhard, Dipl.-Ing.

(56) Entgegenhaltungen:
- CH-A- 125 546
- DE-A- 2 527 603
- DE-A- 3 206 992
- DE-B- 1 168 198

## Beschreibung

Die Erfindung betrifft ein Getriebe gemäß dem Oberbegriff des Patentanspruchs 1.

Zykloidengetriebe z.B. gemäß der DE-A 34 18 686 werden üblicherweise zur Drehzahlübersetzung zwischen zwei Wellen verwendet, insbesondere wenn in einer Stufe hohe Übersetzungen realisiert werden sollen. Dabei ist zumeist der Mehrfachexzenter einer Antriebswelle und das Mitnehmerelement einer Abtriebswelle zugeordnet. Zur Erzeugung von hohen Drehzahlen können die Antriebs- und Abtriebswelle auch vertauscht werden. Für den gemäß der DE-A- 34 07 245 möglichen Einsatz eines solchen Getriebes in vereinfachter Bauweise, beispielsweise als Drehmomentenschlüssel, sind ebenso eine Antriebs- und Abtriebswelle zwingend wie auch für ein durch die DE-A- 32 06 992 bekanntes Getriebe der eingangs genannten Gattung, bei welchem zur beidendigen Abstützung der Mitnehmerbolzen Mitnehmerscheiben zu beiden Seiten der Kurvenscheiben (Zykloidenscheiben) angeordnet sind und diese beiden Mitnehmerscheiben zugleich an ihrem Außenumfang zur (radialen und axialen) Lagerung des Zentralrades "Rollenkranz" dienen, und zwar unter Zwischenfügung von gesonderten Lagern. Hierbei sind die Mitnehmerscheiben stationäre Getriebeteile entweder bezüglich eines ruhenden Gestells (z.B. Fahrzeugrahmen) oder einer bewegten Abtriebswelle, wobei das Zentralrad "Rollenkranz" die Funktion entweder der Abtriebswelle oder des Getriebegestells erfüllt.

Schließlich ist bei einem durch die DE-A- 25 27 603 bekannten Exzenter-Differenzgetriebe gemäß Oberbegriff des Anspruchs 1 ebenfalls mit einer beidendigen Abstützung der Mitnehmerbolzen anstelle eines Zentralrades mit einer durch Bolzen gebildeten Verzahnung für die Kurvenscheiben das Getriebegehäuse mit einem Innenzahnkranz versehen, so daß dieses Differenzgetriebe nicht ohne zwei Wellen, nämlich einer ersten Getriebe-Antriebswelle und einer dieser in koaxialer Anordnung folgenden zweiten Antriebswelle des Exzenters auskommt.

Der Erfindung liegt die Aufgabe zugrunde, im Bestreben nach einer Erweiterung des Anwendungsbereiches ein gattungsgemäßes Getriebe zu schaffen, welches mit einer einzigen , den Antrieb darstellenden Welle auskommt, so daß es wie ein hoch belastbares Drehgelenk zwischen einem stationären und einem relativ dazu schwenkbaren Bauteil verwendbar ist.

Diese Aufgabe ist mit den kennzeichnenden Merkmalen des Patentanspruchs 1 gelöst. Bei dem Getriebe gemäß der Erfindung bedarf es lediglich einer Sperrung der Mitnehmerscheiben , damit bei angetriebenem Mehrfachexzenter sich die Kurvenscheiben, unter Mitnahme des Zentralrades, über den Mitnehmerbolzen abwälzen. Alternativ ist es bei dem Getriebe gemäß der Erfindung auch möglich, anstelle der Mitnehmerscheiben das Zentralrad zu sperren, so daß bei angetriebenem Mehrfachexzenter sich die Kurvenscheiben, unter Mitnahme der Mitnehmerscheiben, im Zentralrad abwälzen. Damit ist das Getriebe als Schwenkgelenk zwischen einem mit dem Zentralrad verbundenen Bauteil und einem mit den Mitnehmerscheiben verbundenen Bauteil verwendbar, wobei das eine das stationäre und damit sperrende Bauteil und das andere das je nach Zuordnung durch das Zentralrad oder die Mitnehmerscheiben geschwenkte Bauteil ist bei einem Antrieb des Mehrfachexzenters durch eine Welle o. dgl..

Schließlich ist, wie auch die in den Unteransprüchen gekennzeichneten bevorzugten Ausgestaltungen verdeutlichen, ein kompakter Getriebeaufbau gewährleistet, bei welchem weder die Lager- noch die Sperrmittel der Mitnehmerscheiben und des Zentralrades aufwendig bauen. So bedarf es keiner gesonderten Lagerung zur radialen Abstützung des Zentralrades. Folglich bietet sich dieses Getriebe für alle Anwendungen eines Drehgelenkes mit relativ geringem Raumbedarf bei höchster Belastbarkeit an, zu der die Abstützung des Zentralrades gegenüber den Mitnehmerscheiben mit beiträgt.

Ein Ausführungsbeispiel der Erfindung sowie ihrer Weiterbildungen wird nachfolgend näher erläutert. Hierzu zeigt die Zeichnung in
- Fig. 1: einen Längsschnitt eines als Drehgelenk nutzbaren Getriebes;
- Fig. 2: die antriebsseitige Ansicht des Getriebes gemäß Fig. 1.

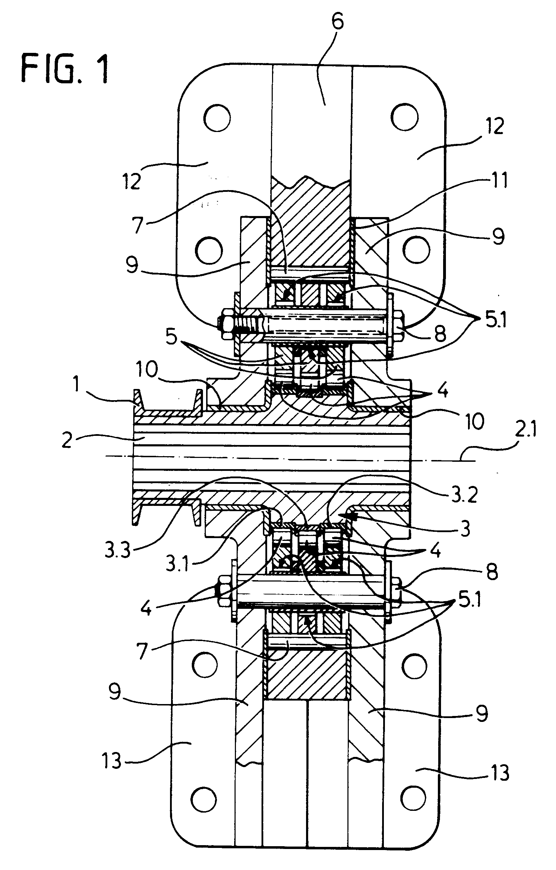

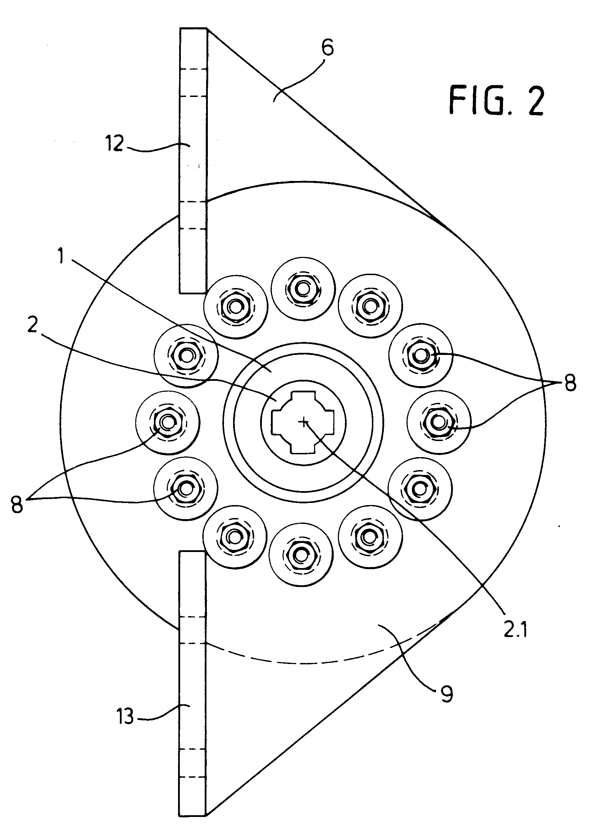

Gemäß Fig. 1 erfolgt der Antrieb des Getriebes über eine z.B. mittels einer Riemenscheibe 1 drehbare Antriebswelle 2, welche als Exzenterwelle mit einem Mehrfachexzenter 3 z.B. mit drei jeweils um 120° gegeneinander versetzten Exzenterlaufbahnen 3.1, 3.2 und 3.3 jeweils gleich großer Exzentrizität ausgebildet ist. Auf den Exzenterlaufbahnen 3.1, 3.2 und 3.3 sind über Wälzkörper 4 Kurvenscheiben 5 gelagert, deren Außenränder jeweils die Form eines geschlossenen Zykloidenzuges aufweisen, über welche die Kurvenscheiben 5 mit einem Zentralrad 6 in formschlüssigem Eingriff stehen, und zwar über eine durch einen zur Drehachse 2.1 der Antriebswelle 2 konzentrischen Außenkranz z.B. von Bolzen 7 gebildete Verzahnung des Zentralrades 6. Die einzelne Kurvenscheibe 5 ist mit einem zu ihrer Drehachse konzentrischen Kranz von Bohrungen 5.1 versehen, in welche Mitnehmerbolzen 8 eingreifen. Diese Mitnehmerbolzen 8 bilden gemäß Fig. 2 einen zur Drehachse 2.1 der Antriebswelle 2 konzentrischen Innenkranz.

Ein derartiger Getriebeaufbau ist im Prinzip bekannt, so daß sich eine eingehende Funktionsbeschreibung der Kurvenscheiben 5 erübrigt. Um mit diesem Getriebeaufbau die Funktion eines hochbelastbaren Drehgelenks beispeilsweise zwischen einem stationären Bauteil (z.B. Hubschrauberzelle) und einem gegenüber diesem um einen bestimmten Winkel schwenkbaren Bauteil (z.B. Heckausleger) erfüllen zu können, sind die Mitnehmerbolzen 8 einem Mitnehmerelement aus zwei Mitnehmerscheiben 9 zugeordnet, welche auf der Antriebswelle 2 gelagert sind, vorzugsweise mittels einer raumsparenden Gleitlagerung 10. Dabei sind die Mitnehmerscheiben 9 zumindest um das Zentralrad 6 gegeneinander beabstandet sowie gegenüber den Kurvenscheiben 5. Durch die Unterteilung in zwei Mit- nehmerscheiben 9, welche über die Mitnehmerbolzen 8 zu einem Mitnehmerelement vereinigt sind, wird eine biegewechselspannungsfreie Abstützung der Mitnehmerbolzen 8 sichergestellt. Außerdem bleiben die Mitnehmerscheiben 9 und das Zentralrad 6 relativ zueinander drehbar, wozu die letzterem zugewandten zur Drehachse senkrechten Planflächen der Mitnehmerscheiben 9 als Axialgleitlager 11 für das Zentralrad 6 ausgebildet sind. Dem zufolge ist nur noch die Sperrung der Mitnehmerscheiben 9 oder des Zentralrades 6 durch eine starre Verbindung mit einem (nicht dargestellten) stationären Bauteil erforderlich , um dann durch Drehen der Riemenscheibe 1 das ungesperrte Zentralrad 6 bzw. bei dessen Sperrung die ungesperrten Mitnehmerscheiben 9 und hiermit ein (nicht dargestelltes) bewegbares Bauteil verschwenken zu können. Für die Verbindung mit den beiden Bauteilen sind das Zentralrad 6 und die Mitnehmerscheiben 9 mit Anschlußmitteln 12 bzw. 13 versehen, vorzugsweise angeformte Schraubenflansche, wobei gemäß Fig. 1 diejenigen der Mitnehmerscheiben 9 aus Montagegründen geteilt sind. Im Falle beispielsweise einer stationären Anordnung der Anschlußmittel 13 der Mitnehmerscheiben 9 erfolgt der Bewegungsablauf derart, daß eine Drehbewegung der Riemenscheibe 1 und folglich der Antriebswelle 2 sowie des Mehrfachexzenters 3 hierüber Drehbewegungen der Kurvenscheiben 5 bewirkt, welche sich dabei über den durch die stationären Mitnehmerscheiben 9 gesperrten Mitnehmerbolzen 8 abwälzen und über ihre zykloldenförmigen Außenränder das Zentralrad 6 mit dem dessen Anschlußmittel 12 zugeordneten Bauteil um einen bestimmten Winkel schwenken.

## Patentansprüche

1. Getriebe mit durch einen Mehrfachexzenter (3.1, 3.2, 3.3) bewegten Kurvenscheiben (5) jeweils mit einem Außenrand in Form eines geschlossenen Zykloidenzuges, die in einem Zentralrad (6) in formschlüssigem Eingriff mit einer durch Bolzen gebildeten Verzahnung (7) abwälzbar angeordnet sind, und mit einem in zwei Mitnehmerscheiben (9) unterteilten Mitnehmerelement, das mittels Mitnehmerbolzen (8) mit den zwischen den Mitnehmerscheiben angeordneten Kurvenscheiben (5) über darin angeordnete Bohrungen (5.1) in Eingriff steht, wobei die Mitnehmerscheiben mittels der Mitnehmerbolzen vereinigt sind, wobei der Mehrfachexzenter (3) den Antrieb bildet und sowohl die Mitnehmerscheiben als auch das Zentralrad als stationäres Element verwendet werden kann, **dadurch gekennzeichnet,** daß das Zentralrad (6) scheibenförmig ausgebildet und zwischen den beiden Mitnehmerscheiben (9) angeordnet ist und daß die dem Zentralrad (6) zugewandten zur Drehachse inneren senkrechten Planflächen der Mitnehmerscheiben (9) als Axialgleitlager (11) für das Zentralrad (6) ausgebildet sind.

2. Getriebe nach Anspruch 1, **dadurch gekennzeichnet,** daß die Mitnehmerscheiben (9) auf einer den Mehrfachexzenter (3) tragenden Antriebswelle (2) gelagert sind.

3. Getriebe nach Anspruch 2, **gekennzeichnet** durch eine Gleitlagerung (10) der Mitnehmerscheiben (9).

4. Getriebe nach Anspruch 1, **dadurch gekennzeichnet**, daß das Zentralrad (6) mit Anschlußmitteln (12) versehen ist.

5. Getriebe nach Anspruch 1, **dadurch gekennzeichnet**, daß die Mitnehmerscheiben (9) mit Anschlußmitteln (13) versehen sind.

6. Getriebe nach Anspruch 4 oder 5, **dadurch gekennzeichnet**, daß die Anschlußmittel (12, 13) angeformte Schraubenflansche sind.

## Claims

1. Gearing comprising cam plates (5), which are set in motion by a multiple eccenter (3.1, 3.2, 3.3), with a respective outer edge in the form of a closed cycloidal pull and which are arranged to be rolled off in a centre wheel (6) in positive engagement with a toothing (7) formed by bolts, and a comprising a pickup element, which is divided into two pickup discs (9) and engaged by means of pickup bolts (8) via therein arranged bores (5.1) with cams (5) arranged between the pickup discs, and that the pickup discs are combined by means of pickup bolts, and that the multiple eccenter (3) serves as a drive and that both the pickup discs and the centre wheel can be used as a stationary element, **characterised in that** the centre wheel (6) is plateshaped and positioned between both pickup discs (9) and that the inner plane surfaces of the pickup discs (9), which are oriented towards the centre wheel (6) and perpendicular to the rotary axis (6), are axial slide mounts (11) for the centre wheel (6).

2. Gearing according to claim 1, **characterised in that** the pickup discs (9) are mounted on a driveshaft (2) which bears the multiple eccenter (3).

3. Gearing according to claim 2, **characterised by** a slide mount (10) of the pickup discs (9).

4. Gearing according to claim 1, **characterised in that** the centre wheel (6) is provided with connecting means (12).

5. Gearing according to claim 1**,** **characterised in that** the pickup discs (9) are provided with connecting means.

6. Gearing according to claim 4 or 5, **characterised in that** the connecting means (12, 13) are integrated bolt flanges.

## Revendications

1. Transmission comportant des disques à cames (5) avec chacun un bord extérieur en forme de cycloïde fermée, qui sont mus par un excentrique multiple (3.1, 3.2, 3.3) et sont disposés avec possibilité de roulement dans une roue planétaire (6) en étant en prise par complémentarité de forme avec une denture (7) formée d'axes, ainsi qu'un élément d'entraînement subdivisé en deux disques d'entraînement (9), lequel élément d'entraînement, par l'intermédiaire de trous (5.1) prévus dans les disques à cames (5), est en prise avec lesdits disques à cames (5) disposés entre les disques d'entraînement, les disques d'entraînement étant réunis par des boulons de retenue, l'excentrique multiple (3) constituant le moyen d'entraînement et les disques d'entraînement aussi bien que la roue planétaire pouvant être utilisés comme élément fixe, caractérisée par le fait que la roue planétaire (6) est agencée en forme de disque et est disposée entre les deux disques d'entraînement (9) et par le fait que les surfaces intérieures planes des disques d'entraînement (9), perpendiculaires à l'axe de rotation et tournées vers la roue planétaire (6) sont agencées sous forme de butée axiale (11) lisse pour ladite roue planétaire (6).

2. Transmission selon la revendication 1, caractérisée par le fait que les disques d'entraînement (9) sont montés sur un arbre d'entraînement (2) qui porte l'excentrique multiple (3).

3. Transmission selon la revendication 2, caractérisée par un montage sur paliers lisses (10) des disques d'entraînement (9).

4. Transmission selon la revendication 1, caractérisée par le fait que la roue planétaire (6) est munie de moyens de liaison (12).

5. Transmission selon la revendication 1, caractérisée par le fait que les disques d'entraînement (9) sont munis de moyens de liaison (13).

6. Transmission selon la revendication 4 ou 5, caractérisée par le fait que les moyens de liaison (12, 13) sont des pattes à vis attenantes.
